# EUROPEAN PATENT SPECIFICATION

(11) **EP 3 484 283 B1**
(45) Date of publication and mention of the grant of the patent: **29.09.2021**
(21) Application number: 17768225.9
(22) Date of filing: 13.07.2017
(51) Int. Cl.: A01K 61/95, A01K 61/13

(54) **DEVICE FOR SORTING FISH OUT FROM A STREAM OF SWIMMING FISH**
VORRICHTUNG ZUM SORTIEREN VON FISCHEN AUS EINEM STROM VON SCHWIMMENDEN FISCHEN
DISPOSITIF POUR TRIER LE POISSON D'UN COURS D'EAU DE POISSONS FLOTTANTS

(30) Priority: 13.07.2016 NO 20161167
(43) Date of publication of application: 22.05.2019
(73) Proprietor: Biosort AS, 1350 Lommedalen (NO)
(72) Inventor: SAUGEN, Bernt, 1350 Lommedalen (NO); IDSØ, Svein Tore, 0477 Oslo (NO); HAUGE, Geir Stang, 1163 Oslo (NO)
(74) Representative: Onsagers AS
(86) International application number: PCT/IB2017/054237
(87) International publication number: WO 2018/011744

(56) References cited:
- WO-A1-01/28318
- WO-A1-2012/008843
- WO-A2-2013/108251
- WO-A2-2013/141711
- CH-A2- 701 341
- GB-A- 2 203 540
- JP-A- H08 152 344

## Description

The invention concerns a device for sorting fish.

Presently, the fish farming industry is a huge industry which is competitive vis a vis other food production from animals. The industry is relatively new and its ambition is to grow steeply in the years ahead. Today, the industry is characterized by manual operations and the level of precision is low in areas such as counting fish, measurement of bio mass, sea lice counting, disease surveillance as well as monitoring fish health and growth.

Today, a 15-20% loss of fish during a production cycle is not uncommon, and this leads to great economic losses, poor utilization of resources, poor utilization of feed, higher discharge of nutrient salts as well as poor well-being of fish ("Tap av Laksefisk i Sjø", Hogne Bleie, 2014). Sea lice and several contagious diseases are increasing problems for the industry. Resistance is a known phenomenon with excessive use of chemicals or medications on whole populations of a species.

The treatment regimens of today are mainly applied to fish in a fish pen, which means that up to 200 000 fish receives the same treatment. The treatment can be medication, use of chemicals, mechanical treatment or slaughtering. The consequence of this is increased risk of resistance, as well as large discharge of chemicals and drugs.

The treatment methods of present also often result in the need to starve fish, concentrating operations as well as pumping to another fish pen or well boat. A concentrating operation comprises making the available volume for fish to swim in smaller. This may for instance be done by decreasing the volume in the fish pen, and in this way increase the density of fish. This may for example be done to concentrate the fish in an area for treatment in the fish pen, or to concentrate the fish for transfer to a well boat using a suction hose or a landing net.

Often, a well boat has an integrated method of concentrating the fish when live fish is to be unloaded. This may for instance be a bulkhead which can be moved through the well in the boat holding the fish. This bulkhead is moved through the well to concentrate the fish against the part of the well from which the fish is discharged.

These treatments inflict stress on the fish, damage and possible loss of mucous layer. The mucous layer (mucosal epithelia) has been proved to be extremely important to the fish' resistance to sea lice and pathogens, and loss of mucous layer makes the fish more vulnerable than from wounds.

Presently, assessment of fish health in the fish farming industry is primarily based on manual solutions; ether directly using landing nets for collecting fish and manual inspection, and possible sampling, possibly using a submerged camera and inspecting the images manually. Automatic solutions for analyzing fish health or solutions making it possible to follow single individuals over time is not established, and no solutions for sorting out diseased fish. Today, different automatic systems for measuring bio mass are available; however, these have an error margin of about 10%, and the industry is very interested in solutions providing biomass measurements with greater accuracy.

NO331843 discloses a method and system for recognition, treatment, sorting, and documenting live fish. The main purpose of the system is vaccination of fish, and the possibility of being able to control the vaccination, possibly sort out undesired fish before vaccination. The system uses image recognition of fish which are transported on a conveyor belt in connection with the vaccination.

This and other devices and methods can be used for identifying characteristic features of the fish. In this connection, there is often a need for discerning fish from each other physically, for example if there is a need to sort diseased fish from healthy fish, fish of low weight into a separate area for farming; fish with proper slaughter weight can be picked out for further processing, etc.

DK167641 discloses a control and guide system for fish, in which fish swim through a measuring cell arrangement, and will be guided further on while swimming to a desired area depending on weight and volume. The fish is guided by either opening or closing hatches in the field or view of the fish, or using a pivotable tube arrangement.

The system of DK167641 guides the fish by giving the fish the possibility of swimming up to the access opening of the sorting area and into the desired sorting area. The weakness of this system is that the fish actively by itself has to swim up to the access opening, and then swim actively all the way through the access opening into the sorting area. Although it is disclosed that the access openings are revealed in the same speed as the relevant fish to ensure the movement does not stress the fish, it is well known that any movement close to the fish may spook it, make it turn around or dramatically increase its speed. Moreover, it is well known that fish in general, and especially if it is spooked, will move at different speeds. Thus, faulty sorting or jamming is a risk, for instance when a fish swimming behind a fish to be sorted out accelerates and takes over the front fish and overlaps with the front fish as it enters the access opening into the sorting area.

WO 2013108251 describes a system for guiding fish one at a time from a reservoir to a desired destination. In the system, a group of fish is "forced" one-by-one into a narrow conduct.

WO 01/28318 describes a system for grading (sorting according to size) fish. The system comprises a tank with several platforms having several different sized openings. The fish seeks to swim downwards, thus being graded by means of the different sized openings. Other fish monitoring systems are disclosed in CH701341 A2, JPH08152344 A and GB2203540 A.

The purpose of the invention is to provide a device which in an efficient and careful way can sort out individual fish.

The purpose of the invention is achieved by the features of the patent claims.

In an embodiment, a device for sorting out fish in a stream of fish comprises a sorting chamber having an inlet port and at least two outlet ports arranged in each end along a sorting direction of the sorting chamber, at least a conveying device movably arranged in the sorting chamber and adapted to guide the fish to at least one of the outlet ports. The conveying device is connected to a processing device, and the conveying device is adapted to receive signals from the processing device which provides information on how to move the conveying device.

A stream of fish, i.e., several fish moving after each other, is guided in towards the sorting device. The fish may follow each other densely, or with an even or uneven distance to each other. The inlet port is the opening into which the fish to be sorted enters the sorting chamber. Then, the fish swim in the sorting direction through the chamber before reaching one of the outlet ports. The purpose of the sorting chamber is to guide the fish to a desired outlet port for further treatment or holding. This is achieved by the conveying device being movable laterally to the swimming direction of the fish; i.e., the sorting direction, and thus, the fish is guided towards the desired outlet port/opening.

One or more outlet ports can be connected to a treatment area for holding and treating fish for diseases or parasites, such that fish which is sorted out are temporarily kept at a different location than the rest of the fish; e.g., for sea lice treatment, vaccination, or another treatment for different diseases.

One or more outlet ports can also be connected to a separate area for holding fish of a particular size. For example, all fish above a certain size can be sorted out to a separate area for delivery to a butchery, and smaller fish are given more time to grow.

Information about which outlet port the fish shall be guided into is present in the processing device, which transmits signals to the conveying device which then guides the fish to the desired outlet port. In some cases, the desired outlet port is in direct line along the sorting direction in the chamber, and then, the conveying device can for instance be kept idle to let the fish swim undisturbed straight ahead. In other cases, the desired outlet port can be arranged sideways shifted relative to the inlet port, and then, the conveying device will move sideways relative to the fish and push the fish to the position in which the fish swim forward and out of the desired outlet port.

In one embodiment, the sorting device comprises a monitoring device for monitoring the fish as it moves through the sorting chamber. Then, the monitoring device is connected to the conveying device and/or the processing device. Such a monitoring device can for example be a camera, photo cells, etc. The monitoring device can reveal that the fish is unwilling to swim further on through the sorting chamber or out from the outlet port, and can transmit signals to the conveying device such that this gives the fish a "push". Alternatively, or in addition, a further device may be arranged, for urging the fish to swim further on, such as a plate or guide element adapted to be shifted in the sorting direction.

The monitoring device may also be adapted to record the size of the fish and adapt the movements of the conveying device to each single fish. Information about the size of the fish or species, or other information about the fish, such as swimming speed towards the sorting chamber, may also be present in the processing device which receives information from other devices. This information can be used to control the conveying device such that it is adapted to each single fish entering the sorting chamber. This causes the fish to be guided in an as gentle way as possible, and also causes increased sorting efficiency. For example, small fish will be detected and separated from each other, fast swimming fish will be guided faster, etc.

In an embodiment, the conveying device comprises at least one guide element which is adapted to be moved across the sorting direction of the sorting chamber. In this embodiment, the outlet ports are arranged adjacent to each other across the sorting direction, such that a sideways shift of the conveying device guides the fish to the desired port.

The conveying device may comprise at least a flow-through port for less resistance from the water in motion.

In an embodiment, the conveying device comprises at least two guide elements arranged in parallel to each other, spaced apart. The guide elements can for example be elongated elements with a smooth surface. The guide elements may be arranged side by side in parallel, and may constitute a fence-formed arrangement. The number of guide elements can be chosen as required, for example in relation to the size of the sorting chamber or the size of the fish to be sorted. In an embodiment, the guide elements are straight rods/beams having a smooth surface.

The guide elements can be arranged independent of each other and adapted to be moved individually across the sorting direction of the sorting chamber, or they can have a fixed position in relation to each other. When arranged independently of each other, they can be moved to be as gentle and/or efficient as possible for the fish in each single case. For example, the processing unit may comprise information about size of the fish, and the number of guide elements moved, and their movement pattern can be adapted to this size. Then, the guide elements can embrace the fish to be sorted out in a specific way and with a set speed, such that the fish has no time to respond and bolt past the sorting device, but will be caught and sorted out. This causes each fish to be caught and guided to the desired port, even if several fish arrive in close proximity to each other.

The conveying device can comprise one or more motors or other drive devices connected to the conveying device for moving the conveying device and guide elements. The motor/drive device can be connected to the processing device, and can be controlled by the processing device based on the information about how to move the conveying device. In an embodiment, the motor itself comprises a control unit controlling the motor, and which receives signals from the processing device.

In an embodiment, the processing device is connected to a device for recording and monitoring health condition and physical development of fish. Such a recording device can comprise one or more imaging devices adapted to image a recording area, a data processor, and a guiding device for guiding fish through the recording area. The data processor is adapted to analyze images from the imaging device, and identify features of the fish present in the recording area, wherein the features characterize health condition of the fish and individuals. The features can be saved in the memory unit.

The imaging device is a device recording images of the recording area, and thus, possible fish present in the recording area. By letting fish desired to be monitored pass through the recording area, images are recorded of the fish. The imaging device can comprise one or more cameras, or other image sensors intended for imaging electromagnetic waves of desired wave length. This might be x-rays, ultraviolet light, visible light, infrared light, micro waves, etc. Using several sensors/cameras, a multidimensional image of the fish can be recorded.

The recording area is in one embodiment designed such that it is substantially covered by the field of view of the imaging device such that fish cannot pass without being imaged. In this way, complete recording of the fish desired to be monitored and recorded is ensured. In most cases, the recording area is completely or partly localized under water. Thus, the fish can swim freely through the recording area, and then, the recording is as stress free as possible for the fish.

The guiding device is a device causing the fish to pass through the recording area. This may for instance be a pump, suction hose, or other suction device, or a device pushing the fish towards and through the recording area. Traditionally, this is performed when fish shall be transferred from one pen to another localization. Other guiding devices may comprise a bait means arranged at one side of the recording area, and a screen device to prevent the fish from reaching the bait means without passing the recording area. The bait means may for example be light or bait, or it may be present as a so called "lice snorkel", i.e., a channel leading up to the surface, in which the fish may swim to get to air. In an embodiment, a conveying device as described in this document is also used as guiding device to convey the fish through the recording area.

A data processor analyses the images from the imaging device and analyses features in the images of the fish such as body dimensions, geometry, pigmentation, color, condition of mucous layer, damage and/or other features characteristic of health condition, individual recognition, or physical development. One or more of the features is/are used to identify single individuals, and each single individual is stored in the memory unit. Additional features are recorded in the same registry connected to its individual.

The memory unit is a unit able to store data. In several embodiments, the memory unit will be physically connected to the data processor; however, it can also be wirelessly connected to the data processor, in the same location or at a remote location, or in the form of a so-called cloud storage solution.

The data processor may in an embodiment be adapted to calculate the bio mass of a group of fish. Based on bodily dimensions, for example, the mass of an individual can be calculated, and, if all individuals have been recorded, the bio mass of the whole group of fish can be calculated. If the recording and monitoring of health and physical development of live fish shall be performed in a fish farming pen or other limited amount of fish, in specific embodiments, a selection of fish can be recorded and their mass calculated, and then, these mass data are extrapolated to estimate the bio mass of the total amount of fish.

In a later stage, the recording of fish as described above can be repeated to analyze the development of the fish. The features characterizing health condition are compared to features of the same individual from at least one previous recording, and the comparison of features is used to analyze the development of the fish. Examples of this is development of individual wounds, revealing anemia in single individuals, e.g., based on deviation from expected growth based on data from earlier measurements; however, which still has a momentary observable growth within the normal for the population, recording of increased number of parasites on the fish, etc.

The data processor of the recording device can be connected to the processing device in the sorting device, or this could be the same unit. The recorded data from the recording device are used to decide optimal movement of the conveying device, and signals representing this are transmitted to the conveying device.

The invention will now be disclosed in more detail using examples, and with reference to the appended figures.
Figure 1 shows an example of an embodiment of the invention.
Figure 2 schematically shows an embodiment of a conveying device.
Figure 3 shows example of an embodiment of the invention used in a fish farming pen with a "lice snorkel".
Figure 4 schematically shows the embodiment in Figure 3.

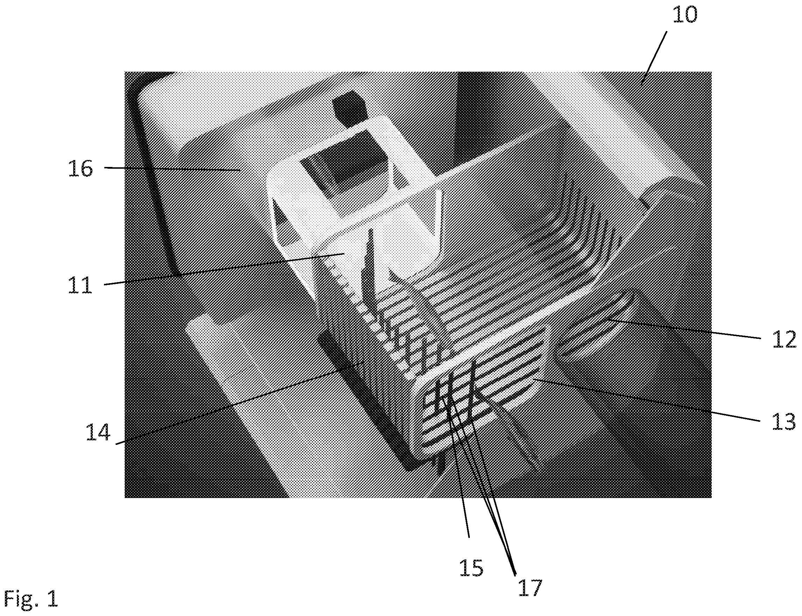

Figure 1 shows an example of a device for sorting out fish in a stream of fish 10 comprising a sorting chamber 14 having an inlet port 11 arranged in one end, and at least two outlet ports 12, 13 arranged in an opposite end of the sorting chamber 14 along a sorting direction. A conveying device 15 is movably arranged in the sorting chamber 14. The conveying device is connected to a processing device 16, and the conveying device is adapted to receive signals from the processing device providing information about how the conveying device 15 shall be moved. In this example, the conveying device 15 comprises several guide elements 17, which can move across the sorting chamber and which are adapted to guide the fish to one of the outlet ports 12, 13. The guide elements are arranged in several parallel rows connected in an endless conveyor belt. A motor is connected to the conveyor belt and pulls the conveyor belt around in accordance with the signals from the processing device 16. The guide elements embrace the fish to be sorted in a specific way, and in a specific speed, such that the fish does not have time to react and bolt past the sorting unit, but is caught and sorted out.

The fish entering through the inlet port 11 may for instance arrive from a recording device in which information of the individual fish is recorded. This information is used by the processing device to decide which outlet port the fish shall be guided to. Based on this information, the guide elements 17 are led to the conveying device 15 in such a way that the fish in a gentle manner is guided towards the desired outlet port. The guide elements can either be controlled to be idle and allow the fish to swim straight ahead, or can be shifted sideways, i.e., transverse to the sorting direction, and thus, the fish is moved sideways. In the example of the Figure, the guide elements are about to guide the fish towards the outlet port 12, as the guide elements close to the head and tail parts of the fish moves slightly faster than the guide elements at the middle part of the fish, such that the fish is embraced, and the fish in the front and rear are caught by the conveying device.

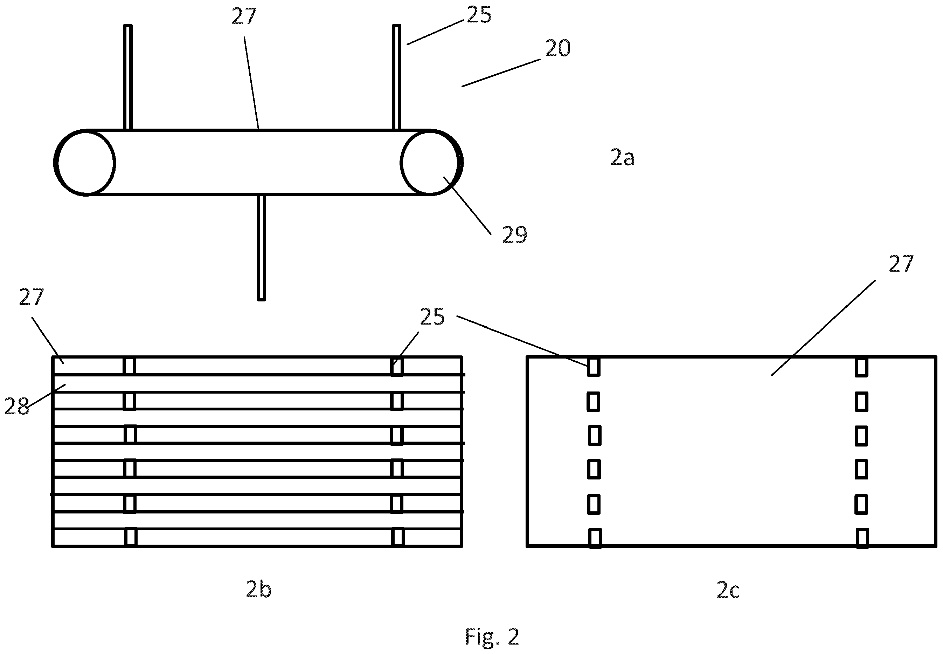

Figure 2 schematically shows an embodiment of the conveying device, for example for use in the example of Figure 1. The conveying device 20 comprises guide elements 25 arranged in several parallel rows connected to an endless conveyor belt 27. A motor is connected to wheels 29 driving the conveyor belt around according to the signals from the processing device. In Figure 2b, each guide element 25 is connected to separate belts 27, with a distance 28, and wherein the separate belts can be driven individually, which makes it possible to follow the shape of the fish and have the guide elements 25 function as a kind of landing net. This is gentle handling of the fish, and it leads to less stress, and, at the same time it can prevent a subsequent fish to be caught by the conveying elements and guided to the wrong outlet port. In Figure 2c, each guide element 25 is connected to a common conveyor belt, and the guide elements constitute a rigid wall shifting the fish. In an embodiment with two outlet ports, the example of Figure 2 having three parallel rows of guide elements is suitable. In an initial position, a row of guide elements is arranged centrally on the upper side of the conveyor belt 27, and then, the sorting chamber is divided in two. If the fish is to be guided towards an outlet port placed directly opposite the inlet port, the conveyor device is idle and the fish swims straight ahead to the proper outlet port. If the fish is to be guided to the outlet port situated sideways shifted relative the inlet port, the conveyor belt 27 rotates such that the guide element moves and pushes the fish sideways in the sorting chamber.

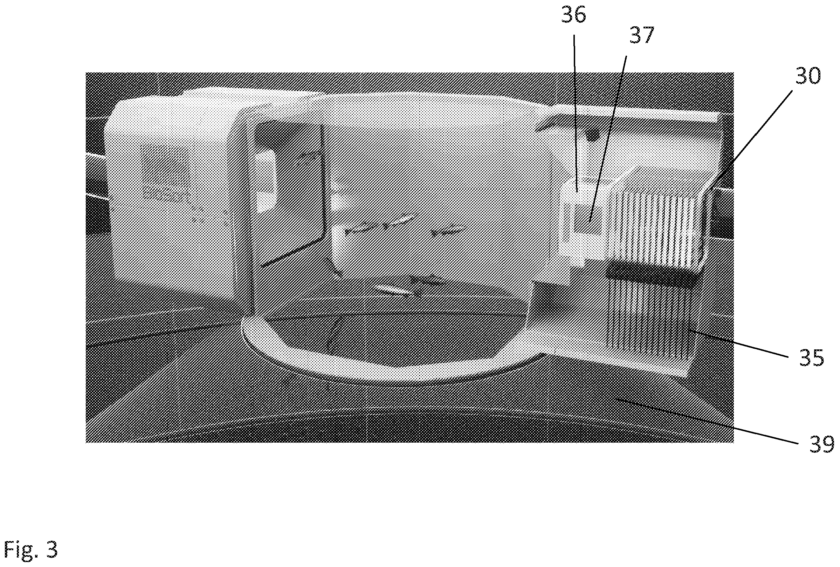

Figure 3 shows an example of an embodiment of the invention used in a system in a fish farming pen with a "lice snorkel". In this system, the fish swim upwards in the lice snorkel 39, and is guided into a device 36 for recording and monitoring health and physical development of the fish. The recording device comprises a recording area 37, a data processor, and a guiding device to guide fish through the recording area. One or more imaging devices images the recording area, and a data processor analyzes images from the imaging device and identifies features of the fish present in the recording area. Then, the fish swims from the recording area through the inlet port to the sorting chamber 30. In the sorting chamber, the conveying device 35 is controlled such that the fish is guided to the desired outlet port. Each outlet port leads the fish to a desired area for further processing, such as for example disease treatment, slaughter, holding for further growth, etc.

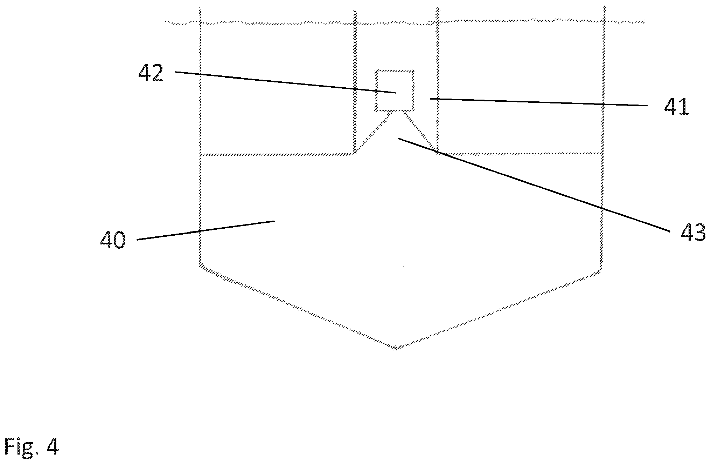

Figure 4 schematically shows a fish farming pen with a lice snorkel 41. The fish is held in a chamber 40, and is then forced to stay at a depth of 8-10 meters to avoid sea lice and other parasites, which mainly reside in the upper layers of the water column. Salmon have an open swim bladder which has to be refilled with air every 7-14 days. Then, the fish will move towards the surface, which is available to it through an inner tube inside the fish pen, which is called a lice snorkel 41. This cyclic migration up to the surface can be exploited to guide 43 fish through a fish health scanner 42. The fish is free to swim down through a trap device in the snorkel. In connection with such a fish farming pen, a sorting device as disclosed in relation to Figure 3 can be used.

## Claims

1. Device (10) for sorting fish in a stream of swimming fish, comprising:
• a sorting chamber (14) having an inlet port (11) arranged in an end and at least two outlet ports (12, 13) arranged in an opposite end of the sorting chamber along a sorting direction,
• at least a conveying device (15) comprising at least one guide element (17), wherein the conveying device is movably arranged in the sorting chamber (14) and adapted to push the fish towards at least one of the outlet ports, and wherein the conveying device (15) is connected to a processing device (16) and adapted to receive signals from the processing device which provide information on how to move the conveying device, **characterized in that** the at least one guide element (17) is adapted to be moved perpendicular to the sorting direction of the sorting chamber (14).

2. Device according to claim 1,
wherein the conveying device comprises at least a flow through port.

3. Device according to claim 1,
wherein the conveying device comprises at least two guide elements arranged in parallel to each other and with a distance to each other.

4. Device according to claim 3,
wherein the guide elements are arranged independently of each other and adapted to be moved individually across the sorting direction of the sorting chamber.

5. Device according to one of claims 1-4,
comprising a motor for moving the conveying device.

6. Device according to claim 1,
wherein the processing device is connected to a system for registering and monitoring health and physical development of live fish, comprising
- at least an imaging device adapted to image a recording area,
- a data processor and a memory unit and
- a guiding device to push fish through the recording area, wherein the data processor is adapted to analyze images from the imaging device and identify features of the fish characterizing health condition and physical development and store the features in the memory unit.

7. Device according to claim 6,
wherein the data processor is adapted to analyze images from the imaging device and identify features of the fish characterizing individuals and store the features in the memory unit.

8. Device according to one of claims 1-7,
wherein the information provided by the processing device comprises one or more of: swimming speed towards the sorting chamber, length of the fish, width of the fish.

9. Device according to claim 6,
wherein the recording area and/or the sorting chamber is completely or partly localized beneath water.

10. Device according to claim 6,
wherein the guiding device comprises a bait means arranged on one side of the recording area and a screen means to prevent the fish from reaching the bait means without passing the recording area.

11. Device according to claim 10,
wherein the bait means is light, air or bait.

12. Device according to one of the preceding claims,
wherein the sorting device is connected to a treatment area for holding or treating fish for diseases or parasites.

## Patentansprüche

1. Vorrichtung (10) zum Sortieren von Fischen in einem Strom schwimmender Fische, umfassend:
• eine Sortierkammer (14) mit einer Einlassöffnung (11), die an einem Ende angeordnet ist, und wenigstens zwei Auslassöffnungen (12, 13), die an einem entgegengesetzten Ende der Sortierkammer entlang einer Sortierrichtung angeordnet sind,
• wenigstens eine Fördervorrichtung (15), umfassend wenigstens ein Führungselement (17), wobei die Fördervorrichtung beweglich in der Sortierkammer (14) angeordnet ist und dafür eingerichtet ist, die Fische in Richtung wenigstens einer der Auslassöffnungen zu schieben, und wobei die Fördervorrichtung (15) mit einer Verarbeitungsvorrichtung (16) verbunden ist und dafür eingerichtet ist, Signale von der Verarbeitungsvorrichtung zu empfangen, die Informationen darüber bereitstellen, wie die Fördervorrichtung zu bewegen ist, **dadurch gekennzeichnet, dass** das wenigstens eine Führungselement (17) dafür eingerichtet ist, senkrecht zu der Sortierrichtung der Sortierkammer (14) bewegt zu werden.

2. Vorrichtung nach Anspruch 1,
wobei die Fördervorrichtung wenigstens eine Durchflussöffnung umfasst.

3. Vorrichtung nach Anspruch 1,
wobei die Fördervorrichtung wenigstens zwei Führungselemente umfasst, die parallel zueinander und mit einem Abstand zueinander angeordnet sind.

4. Vorrichtung nach Anspruch 3,
wobei die Führungselemente unabhängig voneinander angeordnet sind und dafür eingerichtet sind, einzeln entlang der Sortierrichtung der Sortierkammer bewegt zu werden.

5. Vorrichtung nach einem der Ansprüche 1 bis 4,
umfassend einen Motor zum Bewegen der Fördervorrichtung.

6. Vorrichtung nach Anspruch 1,
wobei die Verarbeitungsvorrichtung mit einem System zum Erfassen und Überwachen der Gesundheit und der körperlichen Entwicklung lebender Fische verbunden ist, umfassend
- wenigstens eine Abbildungsvorrichtung, die dafür eingerichtet ist, einen Aufnahmebereich abzubilden,
- einen Datenprozessor und eine Speichereinheit und
- eine Führungsvorrichtung, um die Fische durch den Aufnahmebereich zu schieben, wobei der Datenprozessor dafür eingerichtet ist, Bilder von der Abbildungsvorrichtung zu analysieren und Merkmale der Fische zu identifizieren, die den Gesundheitszustand und die körperliche Entwicklung kennzeichnen, und die Merkmale in der Speichereinheit zu speichern.

7. Vorrichtung nach Anspruch 6,
wobei der Datenprozessor dafür eingerichtet ist, Bilder von der Abbildungsvorrichtung zu analysieren und Merkmale der Fische zu identifizieren, die Individuen kennzeichnen, und die Merkmale in der Speichereinheit zu speichern.

8. Vorrichtung nach einem der Ansprüche 1 bis 7,
wobei die von der Verarbeitungsvorrichtung bereitgestellten Informationen eines oder mehreres aus Folgendem umfassen:
Schwimmgeschwindigkeit in Richtung der Sortierkammer, Länge der Fische, Breite der Fische.

9. Vorrichtung nach Anspruch 6,
wobei sich der Aufnahmebereich und/oder die Sortierkammer vollständig oder teilweise unter Wasser befinden.

10. Vorrichtung nach Anspruch 6,
wobei die Führungsvorrichtung Folgendes umfasst: ein Ködermittel, das auf einer Seite des Aufnahmebereichs angeordnet ist, und ein Abschirmungsmittel, das die Fische daran hindert, das Ködermittel zu erreichen, ohne den Aufnahmebereich zu passieren.

11. Vorrichtung nach Anspruch 10,
wobei das Ködermittel Licht, Luft oder Köder ist.

12. Vorrichtung nach einem der vorhergehenden Ansprüche, wobei die Sortiervorrichtung mit einem Behandlungsbereich zum Halten oder Behandeln der Fische auf Krankheiten oder Parasiten verbunden ist.

## Revendications

1. Dispositif (10) de tri de poissons dans un courant de poissons qui nagent, comprenant :
• une chambre de tri (14) ayant un orifice d'entrée (11) agencé dans une extrémité et au moins deux orifices de sortie (12, 13) agencés dans une extrémité opposée de la chambre de tri suivant une direction de tri,
• au moins un dispositif de transport (15) comprenant au moins un élément de guidage (17), dans lequel le dispositif de transport est agencé de façon mobile dans la chambre de tri (14) et adapté pour pousser les poissons vers au moins l'un des orifices de sortie, et dans lequel le dispositif de transport (15) est raccordé à un dispositif de traitement (16) et adapté pour recevoir des signaux en provenance du dispositif de traitement qui fournissent des informations sur la façon de déplacer le dispositif de transport, **caractérisé en ce que** l'au moins un élément de guidage (17) est adapté pour être déplacé perpendiculairement à la direction de tri de la chambre de tri (14).

2. Dispositif selon la revendication 1,
dans lequel le dispositif de transport comprend au moins un orifice traversant d'écoulement.

3. Dispositif selon la revendication 1,
dans lequel le dispositif de transport comprend au moins deux éléments de guidage agencés en parallèle l'un de l'autre et avec une distance entre eux.

4. Dispositif selon la revendication 3,
dans lequel les éléments de guidage sont agencés indépendamment l'un de l'autre et adaptés pour être déplacés individuellement dans la direction de tri de la chambre de tri.

5. Dispositif selon l'une des revendications 1 à 4,
comprenant un moteur pour déplacer le dispositif de transport.

6. Dispositif selon la revendication 1,
dans lequel le dispositif de traitement est raccordé à un système de relevé et de surveillance de santé et de développement physique de poissons vivants, comprenant
- au moins un dispositif d'imagerie adapté pour réaliser une imagerie d'une zone d'enregistrement,
- un processeur de données et une unité de mémoire et
- un dispositif de guidage pour pousser des poissons à travers la zone d'enregistrement, dans lequel le processeur de données est adapté pour analyser des images en provenance du dispositif d'imagerie et identifier des particularités des poissons caractérisant un état de santé et un développement physique et stocker les particularités dans l'unité de mémoire.

7. Dispositif selon la revendication 6,
dans lequel le processeur de données est adapté pour analyser des images en provenance du dispositif d'imagerie et identifier des particularités des poissons caractérisant des individus et stocker les particularités dans l'unité de mémoire.

8. Dispositif selon l'une des revendications 1 à 7,
dans lequel les informations fournies par le dispositif de traitement comprennent une ou plusieurs parmi : vitesse de nage vers la chambre de tri, longueur des poissons, largeur des poissons.

9. Dispositif selon la revendication 6,
dans lequel la zone d'enregistrement et/ou la chambre de tri sont localisées totalement ou en partie sous l'eau.

10. Dispositif selon la revendication 6,
dans lequel le dispositif de guidage comprend un moyen d'appât agencé sur un côté de la zone d'enregistrement et un moyen de grillage pour empêcher les poissons d'atteindre le moyen d'appât sans passer dans la zone d'enregistrement.

11. Dispositif selon la revendication 10,
dans lequel le moyen d'appât est de la lumière, de l'air ou un appât.

12. Dispositif selon l'une des revendications précédentes,
dans lequel le dispositif de tri est raccordé à une zone de traitement médical pour contenir ou traiter médicalement des poissons contre des maladies ou des parasites.
